# EUROPÄISCHE PATENTSCHRIFT

(11) **EP 2 256 033 B1**
(45) Veröffentlichungstag und Bekanntmachung des Hinweises auf die Patenterteilung: **01.02.2012**
(21) Anmeldenummer: 10005192.9
(22) Anmeldetag: 18.05.2010
(51) Int. Cl.: B64C 13/28, F16H 25/20

(54) **Spindeltrieb**
Spindle drive
Entraînement à broche

(30) Priorität: 25.05.2009 DE 102009022406
(43) Veröffentlichungstag der Anmeldung: 01.12.2010
(73) Patentinhaber: Liebherr-Aerospace Lindenberg GmbH, 88161 Lindenberg/Allgäu (DE)
(72) Erfinder: Bassett, Frederick, 88175 Scheidegg (DE)
(74) Vertreter: Herrmann, Uwe

(56) Entgegenhaltungen:
- EP-A2- 0 076 750
- EP-A2- 2 108 932
- WO-A1-2008/141792

## Beschreibung

Die vorliegende Erfindung betrifft einen Spindeltrieb, insbesondere zur Bewegung einer Komponente eines Flugzeuges.

Spindeltriebe sind in unterschiedlichen Ausführungen bekannt. Sie bewirken eine translatorische Bewegung entweder der Spindel oder mit dieser kämmenden Mutter, um eine lineare Bewegung einer Komponente zu bewirken.

Insbesondere bei der Steuerung von Komponenten eines Flugzeuges ist es wichtig, dass sichergestellt ist, dass selbst bei einem Fehler eines Teils des Spindeltriebes die Steuerbarkeit des Flugzeuges gewährleistet bleibt und dass der fehlerhafte Aktuator vollständig oder zumindest teilweise während des verbleibenden Fluges funktionsfähig bleibt.

Die WO 2008/141792 A1, die den nächstliegenden Stand der technik repräsentiert, betrifft einen Spindeltrieb mit einem Lastpfad, der durch eine Spindel gebildet wird und mit einem zweiten Lastpfad, der koaxial innerhalb der Spindel angeordnet ist und mit dieser in Verbindung steht. Dabei werden Relativbewegungen zwischen der dem ersten und dem zweiten Lastpfad mittels einer Überwachungsvorrichtung erfasst.

Die EP 2 108 932 A2 betrifft einen Drehmomentsensor mit einer Torsionsfeder mit einer ersten und einer zweiten Seite, welche durch ein am Drehmomentsensor anliegendes Drehmoment gegeneinander verdreht werden, wobei eine mechanische Kopplungsvorrichtung zwischen der ersten und der zweiten Seite der Torsionsfeder vorgesehen ist, welche ein Bewegungselement umfasst, das durch eine Verdrehung der ersten Seite gegen die zweite Seite in axialer Richtung bewegt wird.

Die EP 0 076 750 A2 betrifft einen Spindeltrieb mit einer rotatorischen Eingangsbewegung und mit einer linearen Ausgangsbewegung. Innerhalb der Spindel ist dabei ein Torsionsstab angeordnet.

Der vorliegenden Erfindung liegt die Aufgabe zugrunde, einen Spindeltrieb bereitzustellen, der diese Aufgabe erfüllt und der im Fehlerfall eines Lastpfades eine Betätigung über den anderen Lastpfad ermöglicht und mittels dessen angezeigt wird, dass solcher Fehlerfall eingetreten ist.

Diese Aufgabe wird durch einen Spindeltrieb mit den Merkmalen des Anspruchs 1 gelöst.

Danach ist vorgesehen, dass der Spindeltrieb mit einem ersten Lastpfad ausgeführt ist, der durch die Spindel gebildet wird, und mit einem zweiten Lastpfad, der durch einen auf Torsion beanspruchten Torsionsstab gebildet wird, der in der Spindel angeordnet ist und mit dieser derart in Verbindung steht, dass auf die Spindel in wenigstens einem Zustand des Spindeltriebs durch den Torsionsstab eine Drehbewegung ausgeübt wird, wobei in wenigstens einem Bereich der Spindel eine Sensoreinheit angeordnet ist, die derart ausgeführt ist, dass sie eine Relativbewegung zwischen der Spindel und dem Torsionsstab erfasst. Im Fehlerfall, d.h. bei Versagen des ersten oder des zweiten Lastpfades kommt es zu einer Relativbewegung zwischen Spindel und Torsionsstab, die von der Sensoreinheit unmittelbar oder mittelbar erfasst wird.

Der Torsionsstab kann in einem Bereich, vorzugsweise in einem Endbereich des Gewindetriebes drehfest sowie gegen eine axiale Verschiebung gesichert mit der Spindel in Verbindung steht. Eine solche Verbindung kann beispielsweise durch einen Bolzen, Stift oder dergleichen bewerkstelligt werden.

Weiterhin kann vorgesehen sein, dass der Torsionsstab in einem Bereich, vorzugsweise in einem Endbereich des Gewindetriebes über einen keilförmigen Abschnitt mit der Spindel in Verbindung steht, über den ein Drehmoment zwischen Torsionsstab und Spindel übertragbar ist. Weiterhin ist es denkbar, dass der Torsionsstab in einem Bereich, vorzugsweise in einem Endbereich über einen Ring zur Aufnahme axialer Kräfte mit der Spindel in Verbindung steht.

Kommt es zu einem Versagen des ersten Lastpfades, wird das Drehmoment durch den keilförmigen Abschnitt und axiale Kräfte durch den Ring übertragen.

Die Sensoreinheit kann mit einem Bereich, vorzugsweise mit einem Endbereich der Spindel derart in Verbindung stehen, dass sie mit der Spindel axial verschieblich ist. Denkbar ist somit, dass es in einem Fehlerfall zu einer axialen Bewegung der Spindel und somit auch der Sensoreinheit kommt, die dann durch die Sensoreinheit erfasst wird.

Weiterhin kann vorgesehen sein, dass die Sensoreinheit nicht drehbar ausgeführt ist.

Die Spindel kann derart ausgeführt sein, dass sie im normalen Betrieb des Spindeltriebes gegen Verdrehen gesichert ist.

Gemäß der Erfindung steht der Torsionsstab mit der Spindel oder mit der Sensoreinheit mit einer Feder in Verbindung, die eine in axialer Richtung wirkende Kraft ausübt. Bei der Feder kann es sich um eine Druckfeder handeln.

Der Torsionsstab kann derart vorgespannt ausgeführt sein, dass die durch diesen ausgeübten Drehbewegung der Spindel in einer Richtung erfolgt, dass es zu einer Kompression der Feder kommt. Dieser Fall kann beispielsweise dann eintreten, wenn es zu einem Versagen der Spindel in einem Bereich unterhalb der Mutter kommt. In diesem Fall wird das axial bewegliche Ende der Spindel durch den Torsionsstab in eine Drehbewegung versetzt, wodurch es zu einer Relativbewegung zwischen Spindel und Mutter kommt. Durch die axiale Bewegung des axial beweglichen Endes der Spindel wird die Feder komprimiert.

Die Sensoreinheit kann derart ausgeführt sein, dass sie die Bewegung eines Kolbens oder dergleichen erfasst, wobei der Kolben derart angeordnet ist, dass er bei einer Relativbewegung zwischen Torsionsstab und Spindel eine Bewegung erfährt. Die Sensoreinheit kann ein oder mehrfach vorhanden sein und beispielsweise einen oder aus Redundanzgründen auch zwei der mehr LVDT (linear variable displacement transducer) aufweisen, die durch den Kolben aktiviert werden bzw. dessen Verschiebung erfassen.

Der Kolben kann im normalen Betriebszustand des Gewindetriebes in einer Nut des Torsionsstabes angeordnet sein und im Fehlerfall in radialer Richtung zum Torsionsstab bewegt werden.

Vorzugsweise weist der Torsionsstab eine Länge auf, die die der Gewindestange übersteigt.

Weiterhin kann vorgesehen sein, dass der Spindeltrieb mit einer in ihrer Position zu verändernden Komponente, wie beispielsweise einem Ruder, einer Klappe oder dergleichen eines Luftfahrzeuges, insbesondere eines Flugzeuges in Verbindung steht.

Die Erfindung betrifft des Weiteren ein Luftfahrzeug mit wenigstens einem Spindeltrieb nach einem der Ansprüche 1 bis 13.

Die Begriffe Spindeltrieb, Spindel und Mutter sind weit auszulegen und umfassen einen herkömmlichen Gewindespindeltrieb, bei dem eine Mutter mit dem Gewinde einer Gewindestange kämmt. Er umfaßt jedoch ebenso beliebige andere Spindeltriebe, die mit Rollen, Walzen etc. arbeiten sowie auch solche, bei denen die Rollen, Walzen etc. rezirkulieren, wie z.B. Kugelumlaufspindeltriebe oder Rollengewindespindeln.

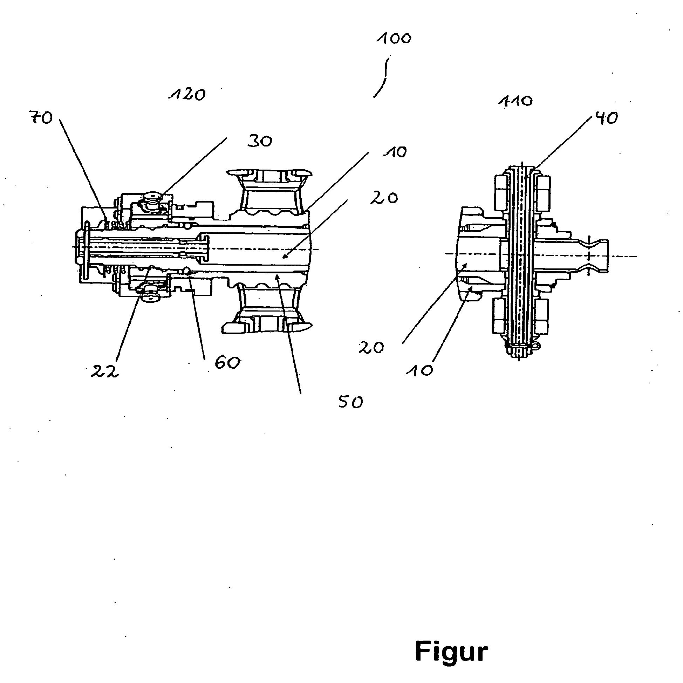

Weitere Einzelheiten und Vorteile der Erfindung werden anhand eines in der Zeichnung dargestellten Ausführungsbeispiels näher erläutert.

Die einzige Figur zeigt die beiden Endbereiche eines Gewindetriebes gemäß der vorliegenden Erfindung.

Bei dem Spindeltrieb 100 gemäß dem vorliegenden Ausführungsbeispiel handelt es sich um einen linearen Aktuator zur Bewirkung der Bewegung einer Komponente beispielsweise eines Flugzeuges. Er kann zwischen der Flugzeugstruktur und beispielsweise einem bewegbaren Paneel oder dergleichen angeordnet sein.

Der Spindeltrieb 100 umfasst eine Sensoreinheit 30 sowie eine nachgeschaltete Architektur, die es ermöglicht, dass ein Versagen des primären sowie des sekundären Lastpfades erfasst wird.

Zur Bewegung der fraglichen Komponente kann entweder die Mutter oder die Spindel dienen. Beide Fälle sind von der Erfindung umfaßt.

Der Spindeltrieb 100 umfaßt einen primären Lastpfad, der durch die Gewindestange 10 gebildet wird, die auf ihrer Außenseite ein Gewinde oder dergleichen aufweist, mit dem eine nicht näher dargestellte Mutter kämmt. Wird die Mutter oder die Gewindestange 10 in eine Drehbewegung versetzt, kommt es zu einer Relativbewegung beider Elemente, wodurch die lineare Bewegung des Aktuators bewirkt wird.

Die Gewindestange 10 ist hohl und nimmt in ihrem Innenraum den Torsionsstab 20 auf. Der Torsionsstab 20 bildet den sekundären Lastpfad.

In dem Endbereich 110 ist der Torsionsstab 20 über einen Bolzen 40 mit der Gewindestange 10 verbunden. Der Bolzen 40 durchdringt radiale Bohrungen in der Gewindestange 10 sowie in dem Torsionsstab 20 und sichert auf diese Weise in diesem Endbereich 110 die Gewindestange 10 und den Torsionsstab 20 gegen Relativbewegungen in axialer Richtung sowie in Drehrichtung.

In dem anderen Endbereich 120 stehen Torsionsstab 20 und Gewindestange 10 über einen keilförmigen Abschnitt 50 miteinander in Verbindung, der derart ausgelegt ist, dass ein Drehmoment von dem Torsionsstab 20 an die Gewindestange 10 übertragen werden kann, sollte es zu einem Versagen des ersten Lastpfades kommen. Der Ring 60, der zwischen Torsionsstab 20 und Gewindestange 10 angeordnet ist, sorgt in diesem Fall für die Übertragung axialer Kräfte.

Der Torsionsstab 20 wird bei der Montage derart unter Torsion in die Gewindestange 10 eingesetzt, dass ein Drehmoment zwischen der Gewindestange 10 und dem Torsionsstab 20 existiert. Die Richtung dieses Momentes verläuft derart, dass es zu einem Abdrehen der Mutter von der Gewindestange 10 kommt, wenn der erste Lastpfad versagt.

Wie ausgeführt, befindet sich an dem Endbereich der Gewindestange 10, in dem diese über den keilförmigen Abschnitt 50 mit dem Torsionsstab 20 in Verbindung steht, die Sensoreinheit 30. Im normalen Betriebszustand des Gewindetriebes 100 befindet sich in einer Nut 22 des Torsionsstabes 20 ein in radialer Richtung zu dem Torsionsstab 20 bewegbar nicht dargestellter Kolben.

Wie dies weiter aus der Figur hervorgeht, ist der Torsionsstab 20 in seinem Endbereich über die Feder 70 gegenüber der Gewindestange 10 und der Sensoreinheit 30 federbelastet.

Kommt es zu einem Versagen der Gewindestange 10 in einem Bereich zwischen der Mutter und dem Verbindungspunkt zwischen Gewindestange 10 und der zu bewegenden Komponente, führen die durch die Luftströmung erzeugten, auf die Komponente wirkenden Kräfte dazu, dass die beiden voneinander getrennten Teile der Gewindestange 10 sich voneinander wegbewegen. Diese Relativbewegung führt dazu, dass in der Figur links dargestellte axial frei bewegliche Ende der Gewindestange 10 sowie die Sensoreinheit 30 relativ zu dem Torsionsstab 30 axial (gemäß der Figur nach links) bewegt werden, wodurch die Feder 70 komprimiert wird. Der Kolben des Sensors 30 wird dadurch axial und senkrecht zum Torsionsstab 20 von diesem wegbewegt, da er aus der Nut 22 in dem Torsionsstab 20 herausgedrückt wird. Diese Bewegung des Kolbens wird von der Sensoreinheit 30 erfasst und es kann ein entsprechendes Signal erzeugt werden.

Kommt es zu einem Versagen der Gewindestange 10 in einem Bereich unterhalb der Mutter, wird die Gewindestange 10 durch den Torsionsstab 20 in eine Drehbewegung versetzt, wobei die Gewindestange 10 von der Mutter "wegbewegt" wird. Diese Relativbewegung führt dazu, dass das axial frei bewegliche Ende der Gewindestange 10 sowie die Sensoreinheit 30 relativ zu dem Torsionsstab 30 axial (gemäß der Figur nach links) bewegt werden, wodurch die Feder 70 komprimiert wird. Der Kolben des Sensors 30 wird dadurch axial und senkrecht zum Torsionsstab 20 von diesem wegbewegt, da er aus der Nut 22 in dem Torsionsstab 20 herausgedrückt wird. Diese Bewegung des Kolbens wird von der Sensoreinheit 30 erfasst und es kann ein entsprechendes Signal erzeugt werden.

Versagt die Gewindestange 10 außerhalb des Einflusses von Kräften auf die zu bewegende Komponente, kann es in einem ersten Fall dazu kommen, dass der Bruch nicht senkrecht zur Spindelachse verläuft. In diesem Fall bewirkt das von dem Torsionsstab 20 erzeugte Drehmoment eine axiale Bewegung der Gewindestange 10 relativ zu dem Torsionsstab 20. Der axial frei bewegliche Teil der Gewindestange 10 wird zusammen mit dem Sensor 30 relativ zu dem Torsionsstab 20 bewegt, wodurch es zu einer Kompression der Feder 70 kommt. Wie oben ausgeführt, wird die dadurch hervorgerufene Bewegung des Kolbens durch den Sensor 30 erfasst.

Kommt es in einem zweiten Fall zu einem Bruch der Gewindestange 10 senkrecht zu der Spindelachse, führt die Torsion des Torsionsstabes 20 zu einer Drehbewegung des Teils der Gewindestange 10, der versagt hat, relativ zum Torsionsstab 20. Die Bewegung der Gewindestange 10 relativ zur Mutter führt dazu, dass die Mutter den axial frei bewegbaren Teil der Gewindestange 10 verschiebt, wodurch dieser Abschnitt der Spindel 10 sowie der Sensor 30 axial zum Torsionsstab 20 bewegt werden. Wie oben ausgeführt, kommt es in diesem Fall zu einer Kompression der Feder 70 sowie zu einer Bewegung des Kolbens aus der Nut 22 des Torsionsstabes 20. Diese wird durch die Sensoreinheit 30 erfasst.

Kommt es schließlich zu einem Versagen des Torsionsstabes 30, geht das Torsionsmoment verloren. In diesem Fall zieht die Feder 70 im Endbereich 120 des Gewindetriebes 100 den abgetrennten Bereich des Torsionsstabes 20 durch die Sen-20 soreinheit 30, wodurch eine Relativbewegung zwischen Torsionsstab 20 und Sensoreinheit 30 hervorgerufen wird. Diese führt zu der oben beschriebenen Bewegung des Kolbens, die durch den Sensor 30 erfasst wird.

## Patentansprüche

1. Spindeltrieb (100) mit einem ersten Lastpfad, der durch die Spindel (10) gebildet wird, und mit einem zweiten Lastpfad, der in der Spindel (10) angeordnet ist und mit dieser derart in Verbindung steht, dass auf die Spindel (10) in wenigstens einem Zustand des Spindeltriebs (100) durch den zweiten Lastpfad eine Drehbewegung ausgeübt wird, wobei der Spindeltrieb (100) eine Sensoreinheit (30) aufweist, die derart ausgeführt ist, dass sie eine Relativbewegung zwischen der Spindel (10) und dem zweiten Lastpfad erfasst,
**dadurch gekennzeichnet,**
**dass** der zweite Lastpfad durch einen auf Torsion beanspruchten Torsionsstab (20) gebildet wird und dass der Torsionsstab (20) mit der Spindel (10) oder mit der Sensoreinheit (30) mit einer Feder (70) in Verbindung steht, die eine in axialer Richtung wirkende Kraft ausübt.

2. Spindeltrieb (100) nach Anspruch 1, **dadurch gekennzeichnet, dass** der Torsionsstab (20) in einem Endbereich (110) des Gewindetriebes (100) drehfest sowie gegen eine axiale Verschiebung gesichert mit der Spindel (10) in Verbindung steht.

3. Spindeltrieb (100) nach Anspruch 1 oder 2, **dadurch gekennzeichnet, dass** der Torsionsstab (20) mit der Spindel (10) mittels eines Bolzens (40) in Verbindung steht, der die Spindel (10) und den Torsionsstab (20) in axialer Richtung und in Drehrichtung relativ zueinander sichert.

4. Spindeltrieb (100) nach einem der vorhergehenden Ansprüche, **dadurch gekennzeichnet, dass** der Torsionsstab (20) in einem anderen Endbereich (120) des Gewindetriebes (100) über einen keilförmigen Verbindungsabschnitt (50) mit der Spindel (10) in Verbindung steht, über den ein Drehmoment zwischen Torsionsstab (20) und Spindel (10) übertragbar ist.

5. Spindeltrieb (100) nach einem der vorhergehenden Ansprüche, **dadurch gekennzeichnet, dass** der Torsionsstab (20) in dem anderen Endbereich (120) über einen Ring (60) zur Aufnahme axialer Kräfte mit der Spindel (10) in Verbindung steht.

6. Spindeltrieb (100) nach einem der vorhergehenden Ansprüche, **dadurch gekennzeichnet, dass** die Sensoreinheit (30) mit dem anderen Endbereich (120) der Spindel (10) derart in Verbindung steht, dass sie mit der Spindel (10) axial verschieblich angeordnet ist.

7. Spindeltrieb (100) nach einem der vorhergehenden Ansprüche, **dadurch gekennzeichnet, dass** die Sensoreinheit (30) drehfest angeordnet ist.

8. Spindeltrieb (100) nach einem der vorhergehenden Ansprüche, **dadurch gekennzeichnet, dass** es sich bei der Feder (70) um eine Druckfeder (70) handelt.

9. Spindeltrieb (100) nach einem der vorhergehenden Ansprüche, **dadurch gekennzeichnet, dass** die durch den Torsionsstab (20) ausgeübte Drehbewegung der Spindel (10) in einer Richtung erfolgt, dass es zu einer Kompression der Feder (70) kommt.

10. Spindeltrieb (100) nach einem der vorhergehenden Ansprüche, **dadurch gekennzeichnet, dass** die Sensoreinheit (30) derart ausgeführt ist, dass sie die Bewegung eines Kolbens oder dergleichen erfasst, wobei der Kolben derart angeordnet ist, dass er bei einer Relativbewegung zwischen Torsionsstab (20) und Spindel (10) eine Bewegung erfährt.

11. Spindeltrieb (100) nach Anspruch 10, **dadurch gekennzeichnet, dass** der Kolben im normalen Betriebszustand in einer Nut (22) des Torsionsstabes (20) angeordnet ist und im Fehlerfall in radialer Richtung zum Torsionsstab (20) bewegt wird.

12. Spindeltrieb (100) nach einem der vorhergehenden Ansprüche, **dadurch gekennzeichnet, dass** der Torsionsstab (20) eine Länge aufweist, die die der Gewindesspindel (10) übersteigt.

13. Spindeltrieb (100) nach einem der vorhergehenden Ansprüche, **dadurch gekennzeichnet, dass** der Spindeltrieb (100) mit einer in ihrer Position zu verändernden Komponente eines Luftfahrzeuges, insbesondere eines Flugzeuges in Verbindung steht.

14. Luftfahrzeug, insbesondere Flugzeug mit wenigstens einem Spindeltrieb (100) nach einem der Ansprüche 1 bis 13.

## Claims

1. A spindle drive (100) having a first load path which is formed by the spindle (10) and having a second load path which is arranged in the spindle (10) and which is connected to it such that a rotational movement is exerted onto the spindle (10) by the second load path in at least one state of the spindle drive (100), wherein the spindle drive (100) has a sensor unit (30) which is made such that it detects a relative movement between the spindle (10) and the second load path,
**characterized in that**
the second load path is formed by a torsion bar (20) which is exposed to torsion and that the torsion bar (20) is connected to the spindle (10) or to the sensor unit (30) by a spring (70) which exerts a force acting in the axial direction.

2. A spindle drive (100) in accordance with claim 1, **characterized in that** the torsion bar (20) is rotationally fixedly connected to the spindle (10) in an end region (110) of the threaded drive (100) and secured against an axial displacement.

3. A spindle drive (100) in accordance with either of claims 1 or 2, **characterized in that** the torsion bar (20) is connected to the spindle (10) by means of a bolt (40) which secures the spindle (10) and the torsion bar (20) relative to one another in the axial direction and in the direction of rotation.

4. A spindle drive (100) in accordance with one of the preceding claims, **characterized in that** the torsion bar (20) is connected to the spindle (10) in another end region (120) of the threaded drive (100) via a wedge-shaped connection section (50) via which a torque can be transmitted between the torsion bar (20) and the spindle (10).

5. A spindle drive (100) in accordance with one of the preceding claims, **characterized in that** the torsion bar (20) is connected to the spindle (10) in the other end region (120) via a ring (60) for the taking up of axial forces.

6. A spindle drive (100) in accordance with one of the preceding claims, **characterized in that** the sensor unit (30) is connected to the other end region (120) of the spindle (10) such that it is axially displaceably arranged with the spindle (10).

7. A spindle drive (100) in accordance with one of the preceding claims, **characterized in that** the sensor unit (30) is arranged rotationally fixedly.

8. A spindle drive (100) in accordance with one of the preceding claims, **characterized in that** the spring (70) is a compression spring (70).

9. A spindle drive (100) in accordance with one of the preceding claims, **characterized in that** the rotational movement of the spindle (10) exerted by the torsion bar (20) takes place in a direction such that a compression of the spring (70) takes place.

10. A spindle drive (100) in accordance with one of the preceding claims, **characterized in that** the sensor unit (30) is made such that it detects the movement of a piston or the like, with the piston being arranged such that it undergoes a movement on a relative movement between the torsion bar (20) and the spindle (10).

11. A spindle drive (100) in accordance with claim 10, **characterized in that** the piston is arranged in a groove (22) of the torsion bar (20) in the normal operating state and is moved in a radial direction toward the torsion bar (20) in the defect event.

12. A spindle drive (100) in accordance with one of the preceding claims, **characterized in that** the torsion bar (20) has a length which exceeds that of the threaded spindle (10).

13. A spindle drive (100) in accordance with one of the preceding claims, **characterized in that** the spindle drive (100) is connected to a component of an aircraft, in particular of an airplane, whose position is to be changed.

14. An aircraft, in particular an airplane, having at least one spindle drive (100) in accordance with one of the claims 1 to 13.

## Revendications

1. Entraînement à broche (100) avec un premier trajet de charge, qui est formé par la broche (10), et avec un deuxième trajet de charge, qui est disposé dans la broche (10) et est relié à celle-ci de telle sorte qu'est exercé sur la broche (10), dans au moins un état de l'entraînement à broche (100), par le deuxième trajet de charge un mouvement de rotation, où l'entraînement à broche (100) présente une unité de capteur (30) qui est réalisée de telle sorte qu'elle détecte un mouvement relatif entre la broche (10) et le deuxième trajet de charge,
**caractérisé en ce que** le deuxième trajet de charge est formé par une barre de torsion (20) sollicitée en torsion et **en ce que** la barre de torsion (20) avec la broche (10) ou avec l'unité de capteur (30) est en liaison avec un ressort (70) qui exerce une force agissant dans la direction axiale.

2. Entraînement à broche (100) selon la revendication 1, **caractérisé en ce que** la barre de torsion (20) est en liaison d'une manière immobile en rotation dans une zone d'extrémité (110) de l'entraînement à broche (100) et, d'une manière assurée à l'encontre d'un déplacement axial, avec la broche (10).

3. Entraînement à broche (100) selon la revendication 1 ou 2, **caractérisé en ce que** la barre de torsion (20) est en liaison avec la broche (10) au moyen d'un boulon (40) qui assure la broche (10) et la barre de torsion (20) dans la direction axiale et dans la direction de rotation l'une relativement à l'autre.

4. Entraînement à broche (100) selon l'une des revendications précédentes, **caractérisé en ce que** la barre de torsion (20) est en liaison dans une autre zone d'extrémité (120) de l'entraînement à broche (100) par une section de liaison conique (50) avec la broche (10), par laquelle un couple de rotation peut être transféré entre la barre de torsion (20) et la broche (10).

5. Entraînement à broche (100) selon l'une des revendications précédentes, **caractérisé en ce que** la barre de torsion (20) dans l'autre zone d'extrémité (120) est en liaison avec la broche (10) par une bague (60) pour la réception de forces axiales.

6. Entraînement à broche (100) selon l'une quelconque des revendications précédentes, **caractérisé en ce que** l'unité de capteur (30) est en liaison avec l'autre zone d'extrémité (120) de la broche (10) de telle sorte qu'elle est disposée d'une manière déplaçable axialement avec la broche (10).

7. Entraînement à broche (100) selon l'une des revendications précédentes, **caractérisé en ce que** l'unité de capteur (30) est disposée d'une manière résistante à la torsion.

8. Entraînement à broche (100) selon l'une des revendications précédentes, **caractérisé en ce que** dans le cas du ressort (70), il s'agit d'un ressort de pression (70).

9. Entraînement à broche (100) selon l'une des revendications précédentes, **caractérisé en ce que** le mouvement de rotation de la broche (10) exercé par la barre de torsion (20) a lieu dans une direction dans laquelle se produit une compression du ressort (70).

10. Entraînement à broche (100) selon l'une des revendications précédentes, **caractérisé en ce que** l'unité de capteur (30) est réalisée de telle sorte qu'elle détecte le mouvement d'un piston ou analogue, où le piston est disposé de telle sorte que lors d'un mouvement relatif entre la barre de torsion (20) et la broche (10) il est soumis à un déplacement.

11. Entraînement à broche (100) selon la revendication 10, **caractérisé en ce que** le piston est disposé à l'état de fonctionnement normal dans une rainure (22) de la barre de torsion (20) et, en cas d'erreur, est déplacé dans la direction radiale vers la barre de torsion (20).

12. Entraînement à broche (100) selon l'une des revendications précédentes, **caractérisé en ce que** la barre de torsion (20) présente une longueur qui dépasse celle de la broche filetée (10).

13. Entraînement à broche (100) selon la revendication précédente, **caractérisé en ce que** l'entraînement à broche (100) est en liaison avec un composant dont la position doit être modifiée, d'un aéronef, en particulier d'un avion.

14. Aéronef, en particulier avion avec au moins un entraînement à broche (100) selon l'une des revendications 1 à 13.
